Europäisches Patentamt

(19) European Patent Office    (11) Publication number: **0 052 683**

Office européen des brevets    **B1**

(12)    **EUROPEAN PATENT SPECIFICATION**

(45) Date of publication of patent specification: **12.03.86**    (51) Int. Cl.⁴: **G 01 F 1/28**

(21) Application number: **80304224.1**

(22) Date of filing: **25.11.80**

(54) **Instrument for measuring the flow rate of media in motion, mainly the flow rate of liquid.**

(43) Date of publication of application:
**02.06.82 Bulletin 82/22**

(45) Publication of the grant of the patent:
**12.03.86 Bulletin 86/11**

(84) Designated Contracting States:
**AT BE CH DE FR GB IT LI LU NL SE**

(56) References cited:
**DE-B-1 162 586**
**FR-A- 854 358**
**FR-A-1 005 415**
**GB-A- 140 964**

(73) Proprietor: **Közuti Közlekedési Tudományos**
**Kutato Intézet**
**Thán Károly u. 3-5**
**Budapest 1119 (HU)**

(72) Inventor: **Böhm, Nándor**
**Damjanich Utca 54**
**H-1071 Budapest (HU)**
Inventor: **Böhm, János**
**Zalai Utca 1/c**
**H-1125 Budapest (HU)**
Inventor: **Böhm, Róbert**
**Piroska Utca 9**
**H-1016 Budapest (HU)**

(74) Representative: **Gold, Tibor Zoltán et al**
**T.Z.GOLD & COMPANY 9, Staple Inn**
**London WC1V 7QH (GB)**

Courier Press, Leamington Spa, England.

## Description

The invention relates to an instrument for measuring the flow rate of moving media, especially flowing liquids, which can indicate the variation in the quantity of the liquid flowing through slots adjacent to a rotary vane disposed in the interior of the instrument housing, based on the differential pressure acting on the vane as a result of the flow. The scale of the instrument is calibratable to liquids of different specific weight (density), or to variation in specific weight; the flow cross-section is externally adjustable and automatically variable by sensing the viscosity which varies with the temperature. The instrument is also suitable for measuring the flow of gases and dry steam.

The need for measuring the instantaneous flow rate of liquids during a period of rapid variation thereof and during a very small interval, $\Delta t$, of time frequently arises in practice.

Known and generally used flow meters may be divided into two groups: through-flow volume counters and those measuring the through-flow velocity.

The devices of the first group include e.g. wet or dry meters, including a piston, a rotary blade, or chamber-type instruments.

The fuel gauges used in motor vehicles are actually also flow rate counters, because the quantity of the consumed liquid fuel is measured during a certain time or distance. The averaging employed here does not yield an adequate picture, because during the time measurement—due to the road conditions, speed variations of the vehicle, (acceleration, deceleration) in other words, due to the engine load fluctuations—these instruments give a highly variable result of large error percentage, for the measured length of time or distance.

In the other group of the flow meters, the rate can be measured in the knowledge of the given cross-section with the formula based on the flow velocity $Q=Fc$. However, the velocity is influenced by several factors, such as pressure, specific weight, specific heat, absolute temperature contraction, viscosity. The variation in velocity, usually expressed in m/sec, is mainly due to the variation of the differential pressure with the variation as a square root function with the density. Hence, the variation of velocity may only be indicated with very complicated instruments and calculated with the use of slide rule or other computing instruments.

Velocity meters functioning with throttling or by ram pressure measurement are familiar but these give the data only for the evaluation, and neither these nor the Prandtl-type tube—which function by converting the speed to pressure—measure the flow rate, and do not show the result of the measurement.

From GB—A—140964 a flow meter according to the prior art portion of claim 1 is known with an instrument housing the interior of which is connected to a liquid inlet and a liquid outlet separated by a vane rotatably mounted on a central spindle to which is fixed a pointer moving over a scale. The differential pressure across the vane is balanced by a flat spiral spring that acts on the spindle.

However, given that the velocity of the liquid varies with the square of the density of a given liquid and also with the square of the differential pressure across the vane, this known instrument does not allow accurate measurement.

The characterising features of the instrument according to the invention for measuring the flow rate of liquids are set out in claim 1. The instrument may be used for the setting and accurate measurement of the load or consumer demand of various flowing media such as water meters, gas meters, as well as for monitoring the steam consumption of devices functioning with dry steam, for measuring the fuel consumption of internal-combustion engines and vehicles, for measuring the flow rate of liquids flowing in pipelines, and the friction resistance, pressure loss etc., of pipelines. By connecting the instrument in a manner analogous to a shunt connection, it is applicable for measuring varying liquid rates in any quantity or volume.

The instrument functions with throttling in such a way that the differential pressure and variation of the liquid passing through the instrument to the consumer is indicated by the quantity of the liquid. The adjustment or calibration of the instrument related to the specific weight variation of the liquid can be performed externally. The extent of the throttling as well as the through-flow cross-section are also adjustable from the outside as a function of the nature of the liquid. The flow rate of liquid is indicated by the instrument on a logarithmic scale, which when connected with some other varying phenomenon, is suitable for the building of new instruments for measuring such as Q/km, G/km, etc., the obtained values may vary instantaneously per unit time $\Delta t$.

The invention is described in detail, by way of example, with reference to the accompanying drawings, in which:

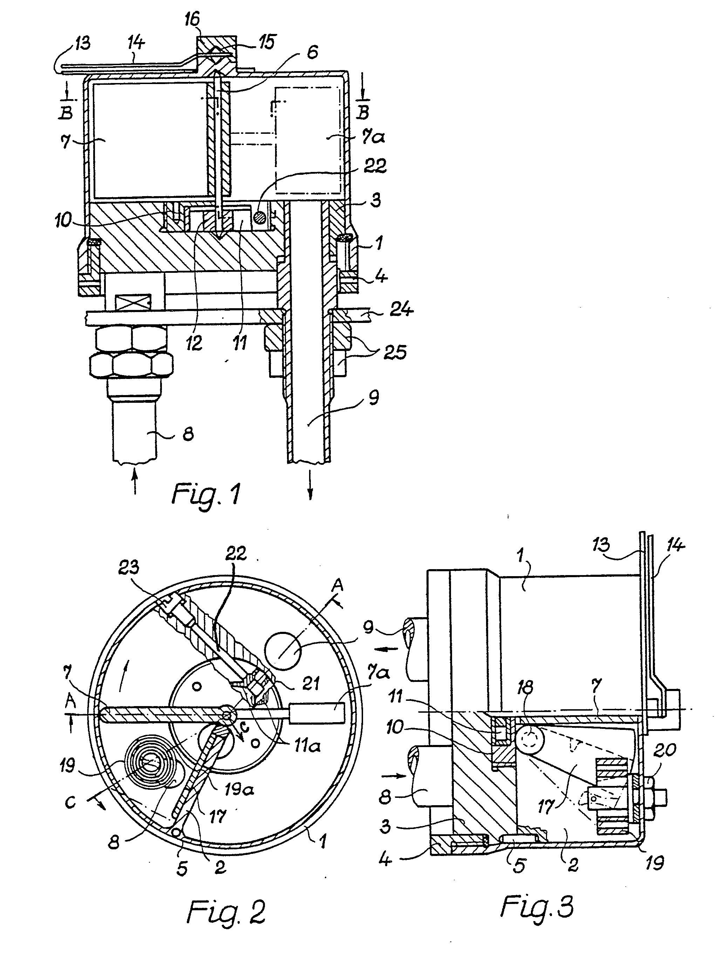

Figure 1 illustrates a flow meter in vertical section along a plane indicated by the lines A—A in Figure 2,

Figure 2 is a partially broken-away cross-section along a plane indicated by the lines B—B Figure 1; and

Figure 3 shows one-half of the flow meter of Figure 2 in side elevation and one half in cross-section along a plane indicated by the lines C—C in Figure 2.

Most of the functional construction of the instrument is accommodated in a pot-shaped housing 1, which has a wall 2 that extends radially towards the centre, and the bottom of which is closed by a bottom plate 3 fixed in the housing 1 by a threaded screw 4, dowel pin 5, and associated packing. The ends or tips of a shaft 6 are journalled in the housing 1 and the bottom plate 3. A vane or blade 7 with its counter-balance arm 7a is fixed to the shaft 6 for rotation therewith.

In use, the liquid, the flow rate of which is to be measured, flows into the instrument housing through an inlet pipe 8 and passes out through an outlet pipe 9. The liquid inlet and outlet pipes 8, 9 are fixed into the bottom plate 3 by screwed joints including packing rings. A coil or spiral spring 11 disposed in a spring casing 10 is arranged in a space or chamber formed in the bottom plate 3 and is protected by packing elements against the penetration of liquid. The hub or core 12 of the spring is fixed on shaft 6.

The vane 7 is made of a suitably dimensioned, strong, permanent magnet, or carries such a material in laminated form on it.

A logarithmically graduated scale 13 is arranged on the top of housing 1 with an indicator hand or pointer 14 made of mild steel disposed above the scale 13. The pointer 14 is fixed on a pin 15 the pointed tips of which are rotatably journalled in a bearing housing in cylindrical extension or boss 16 of the housing 1. The pointer 14 is in use rotated by the magnetic force of the vane 7 of, or covered with, permanently magnetic material.

Narrow gaps or clearance—the cross-section of which can be determined on the basis of the flow coefficient with calculation or calibration—are formed between the three edge surfaces of the vane 7 and it contiguous surfaces, i.e. the upper plate or wall, side walls and bottom 3 of the housing 1. Furthermore, clearances or gaps are also formed between the hub of the shaft and the radial wall 2 for the purpose of allowing the liquid flowing through the inlet pipe 8 to pass on.

The variations of viscosity and specific weight of the various liquids necessitates the use of an adjustable control plate 17 disposed between the radial wall 2 and the vane 7 in the space which admits the liquid arriving through the inlet pipe 8. The control plate is expediently rotatably journalled in the wall 2 around a pin 18, and by adjusting its position, the flow cross-section of the liquid is variable and controllable.

Adjustment of the control plate 17 in dependence on the temperature is performed suitably by a sensing spring 19 which is temperature-sensitive, expediently thermoelastic; preferably the spring 19 is a bimetallic spring sealedly fastened to the upper plate of housing 1 by means of a screw 20. The heat-sensitive spring 19 is connected to the control plate 17 by its end 19a. Since by virtue of its heat-sensitivity the spring 19 automatically senses variations in the viscosity of the liquid arriving through the inlet pipe 8, it accordingly alters the volume of the liquid as well as by actuating the control plate 17.

The spring 11 in the spring casing 10 is surrounded by a ring 11a. With the aid of a screw 21 located in the extensions of said ring, the distance between the extensions of the ring and thereby the diameter of ring 11a surrounding the spring 11 may be varied. By reducing or increasing the diameter, the number of external turns of the spring, its tensioning, moment and characteristic curve can be varied. The screw 21 can be turned from the outside with a screwdriver inserted through a bore 22, and then the bore is closed by a screw 23.

The instrument can be mounted on a plate 24 or supporting structure available at its place of application, or by means of the liquid inlet and outlet pipes 8 and 9 and screw nuts 25.

The operation of the instrument is as follows:

The liquid to be measured flows in through the inlet pipe 8 and passes through the clearances around the vane 7 into the space adjacent the outlet pipe 9, then to its place of application or to the consumer. In the meantime, the pressure of the liquid arriving through the inlet pipe 8 acts on the vane 7, while the pressure drops at the other side of the blade, since the liquid flowing through the clearances around the vane 7 exits through the outlet pipe 9. The flow is independent of the absolute pressure, and it results only from the differential pressure upstream and downstream of the blade. This differential pressure acts on the vane 7 which is kept in equilibrium against angular displacement by the spiral spring 11.

The spiral spring is in itself a novel, logarithmic spring, which at its external and internal initial turns is wound to bear the inner surface of ring 11a and on the outer surface of spring core 12.

According to a constructional alternative of the spiral spring, its cross-section diminishes or increases along the length of the strip of the spring starting from the outer or the inner turn, which is achieved by dimensioning it suitably in such a way that the cross-section is varied while keeping its thickness at a constant value, by continuously reducing or increasing the width of the spring strip or band. This way the work done by the spring, i.e. its resilient, restoring work, the so-called counter-moment acting on the vane 7, as well as the spring force diagram, the so-called spring characteristic curve, can be formed according to a logarithmic curve which deviates from a straight line.

The characteristic of the spring is formed according to a logarithmic characteristic curve in the illustrated embodiment by turning the screw 21, thus varying the diameter of ring 11a that includes the spiral spring. This in turn varies the number of turns of the spring band, starting from the outer turns, whereby the tension and working (effective) length of the spring are also varied.

The logarithmic coil spring 11 obviates the need to use a square-root scale since square roots are identically spaced at 1/2 on the logarithmic scale. Also, the logarithmic scale enables the adjustment of the scale to correspond to various values of specific weight of flow coefficient, whereby to indicate the appropriate measurement values. Multiplying with the square-root of the specific weight, the weight of the liquid is obtained, while by dividing with the same, its volume is obtained; these values can be read off the logarithmic scale. By actuation of the control plate 17 adjustably arranged on wall 2, the heat-sensing spring 19 varies the flow cross-section of the liquid in such a way that the volume of through-flow is varied according to changes in the viscosity which varies automatically with temperature variations.

If the viscosity of the liquid does not vary within the measurement limits, then the control plate 17 and the actuating heat-sensing spring 19 can be disconnected by its end 19a since even in case of deviations due to manufacturing and assembly errors, the correct measuring value can be adjusted by calibration. This is done by measuring a certain quantity of liquid, and, due to the properties of the logarithmic spring, by angularly displacing the scale division 13. If the measured liquid quantity does not give an accurate value in other ranges, then by turning the screw 21 the logarithmic spring can be adjusted and the instrument set for the accurate measurement of the varying quantity of liquid.

The quantity or volume of gases and dry steam is also measurable with the logarithmic scale; for such measurement, the temperature and pressure are similarly calibratable according to a formula consisting of multipliers. The temperature and pressure could hitherto only be calculated from a diagram or manually by a slide rule.

In addition to the above described preferred embodiment, the full scale deflection (angular displacement) of the pointer 14 may be converted to 360° with the use of gears. Furthermore, the range of rotation, or the working movement of the vane 7 can be increased to about 120—130° even without gears. The instrument including its logarithmic spiral spring may be integrated or combined with other instruments, furthermore embodiments thereof may be constructed for measurements in other measurement units.

## Claims

1. Instrument for measuring the flow rate of media in motion, especially the flow rate of liquids, comprising an instrument housing (1) which has a wall (2) dividing the interior of said housing (1) into two parts, a liquid inlet pipe (8) and a liquid outlet pipe (9), a vane (7) journalled in said housing (1) on a shaft (6) for angular displacement under the effect of liquid flow, clearances between the edges of said vane (7) and the internal surfaces of the said housing (1), a restoring spring (11) connected to said shaft (6) for controlling the movement of said vane (7); and wherein said instrument housing (1) is further provided with a scale (13) and an indicator (14) movable relative to the scale (13) and connected to said shaft (6), characterised in that said spring (11) is a logarithmic coil spring (11) and said scale (13) is a logarithmic scale (13).

2. Instrument as claimed in claim 1, characterised in that the vane (7) is of permanent magnetic material or covered with such material.

3. Instrument as claimed in claim 1 or 2, characterised in that the logarithmic coil spring (11) is journalled in a ring (11a) surrounding the spring (11), the diameter of said ring (11a) being variable, whereby to vary the number of turns of the spring (11) and its tensioning force.

4. Instrument as claimed in any preceding claim, characterised in that the scale (13) is adjustable by turning.

5. Instrument as claimed in any preceding claim, characterised in that a heat-sensitive spring (19) is provided within instrument housing (1) above the said inlet pipe (8) for compensating variations in the viscosity of said liquid with temperature, the heat-sensitive spring (19) being connected with a control plate (17) extending radially from a wall of said housing (1) to vary the flow cross-section of the liquid.

## Patentansprüche

1. Gerät zum Messen der Strömungsrate von bewegten Medien, insbesondere der Strömungsrate von Flüssigkeiten, mit einem Gerätegehäuse (1), welches eine das Innere des·Gehäuses (1) in zwei Teile unterteilende Wand (2) aufweist, einem Flüssigkeitseinlaßrohr (8) und einem Flüssigkeitsauslaßrohr (9), einer Schaufel (7), die in dem Gehäuse (1) an einer Welle (6) zur Winkelversetzung unter der Wirkung der Flüssigkeitsströmung schwenkbar ist, wobei Spalte zwischen den Kanten der Schaufel (7) und den Innenflächen des Gehäuses (1) vorhanden sind, einer Rückstellfeder (11), die zum Steuern der Bewegung der Schaufel (7) an der Welle (6) angreift, und einer Skala (13) und einem relativ zu der Skala (13) bewegbaren, an der Welle (6) befestigten Zeiger (14) an dem Gerätegehäuse, dadurch gekennzeichnet, daß die Feder (11) eine logarithmische Spiralfeder (11) ist und die Skala (13) eine logarithmische Skala (13) ist.

2. Gerät nach Anspruch 1, dadurch gekennzeichnet, daß die Schaufel (7) aus einem permanent magnetischen Material besteht oder mit einem derartigen Material beschichtet ist.

3. Gerät nach Anspruch 1 oder 2, dadurch gekennzeichnet, daß die logarithmische Spiralfeder (11) in einem die Feder (11) umgebenden Ring (11a) gelagert ist, dessen Durchmesser variabel ist, so daß die Anzahl der Windungen der Feder (11) und deren Federkraft veränderbar ist.

4. Gerät nach einem der vorangehenden Ansprüche, dadurch gekennzeichnet, daß die Skala (13) drehverstellbar ist.

5. Gerät nach einem der vorangehenden Ansprüche, dadurch gekennzeichnet, daß eine wärmeempfindliche Feder (19) in dem Gerätegehäuse (1) über dem Einlaßrohr (8) zum Kompensieren von Änderungen der Viskosität der Flüssigkeit mit der Temperatur an einer Steuerplatte (17) angeschlossen ist, die sich zur Änderung des Durchflußquerschnittes der Flüssigkeit radial von einer Wand des Gehäuses erstreckt.

## Revendications

1. Appareil pour mesurer le débit d'un milieu en mouvement, en particulier le débit liquides, comprenant un carter d'appareil (1) comportant une paroi (2) divisant l'intérieur dudit carter (1) en deux parties, un tuyau d'entrée de liquide (8) et un tuyau de sortie de liquide (9), une aube (7) montée à rotation dans ledit carter (1) sur un arbre (6) et apte à se déplacer angulairement sous l'effet du débit de liquide, des jeux entre les bords de ladite aube (7) et les surfaces internes dudit carter (1), un ressort de rappel (11) relié audit arbre (6) pour contrôler le déplacement dudit aubage (7) et dans lequel ledit carter d'appareil (1) est, en outre, muni d'une échelle (13) et d'un indicateur (14), mobile par rapport à l'échelle (13) et relié audit arbre (6), caractérisé en ce que ledit ressort (11) est un ressort spiral logarithmique (13) et ladite échelle (13) est une échelle logarithmique.

2. Appareil tel que revendique à la revendication 1, caractérisé en ce que l'aube (7) est en matériau pour aimant permanent ou est recouverte d'un tel matériau.

3. Appareil tel que revendique à la revendication 1 ou 2, caractérisé en ce que le ressort spiral logarithmique (11) est monté à rotation dans un anneau (11a) entourant le ressort (11), et dont le diamètre est variable, de façon à faire varier le nombre de tours du ressort (11) et sa force de précontrainte.

4. Appareil tel que revendiqué dans l'une quelconque des revendications précédentes, caractérisé en ce que l'échelle (13) est réglable par rotation.

5. Appareil tel que revendique dans l'une quelconque des revendications précédentes, caractérisé en ce qu'un ressort (19) sensible à la chaleur est prévu dans le carter d'appareil (1) au-dessus dudit tuyau d'entrée (8) afin de compenser les variations de la viscosité dudit liquide avec la température, le ressort sensible à la chaleur (19) étant relié à une plaque de commande (17) s'étendant radialement à partir d'une paroi dudit carter (1) afin de faire varier la section transversale d'écoulement du liquide.

Fig. 1

Fig. 2

Fig. 3

1